# FASCICULE DE BREVET EUROPEEN

(11) **EP 0 961 546 B1**
(45) Date de publication et mention de la délivrance du brevet: **03.09.2003**
(21) Numéro de dépôt: 98903090.3
(22) Date de dépôt: 19.01.1998
(51) Int. Cl.: A01N 37/06, A01N 37/02

(54) **COMPOSITION ADJUVANTE A USAGE PHYTOSANITAIRE**
ZUSAMMENSETZUNG ZUM ZUSATZ ZU PFLANZENSCHUTZMITTELN
ADDITIVE COMPOSITION FOR PLANT PROTECTION

(30) Priorité: 20.01.1997 FR 9700546
(43) Date de publication de la demande: 08.12.1999
(73) Titulaire: ACTION PIN, 40100 Dax (FR)
(72) Inventeur: DUFAU, Ghislain, F-40100 Dax (FR); LAUILHE, Jean-Paul, F-40990 Saint Paul lès Dax (FR)
(74) Mandataire: Jacobson, Claude
(86) Numéro de dépôt international: FR9800096
(87) Numéro de publication internationale: WO98031223

(56) Documents cités:
- EP-A- 0 517 569
- WO-A-91/05472
- WO-A-94/24858
- WO-A-95/17822
- AU-A- 7 571 487
- BE-A- 1 002 598
- CA-A- 1 187 409
- FR-A- 2 447 681
- FR-A- 2 729 307
- US-A- 4 822 407
- US-A- 5 407 899
- US-A- 5 580 567
- HAMILTON R J: "STRUCTURE AND GENERAL PROPERTIES OF MINERAL AND VEGETABLE OILS USED AS SPRAY ADJUVANTS" PESTICIDE SCIENCE, vol. 37, no. 2, pages 141-146, XP000381447
- DATABASE WPI Section Ch, Derwent Publications Ltd., London, GB; Class C03, AN 73-20991U XP002043193 & JP 48 011 024 B (TOYO AEROSOL KOGYO KK)

## Description

La présente invention concerne des adjuvants pour produits phytosanitaires, notamment les produits fongicides, insecticides, herbicides ou régulateurs de croissance.

De nombreux produits phytosanitaires sont actuellement disponibles sur le marché. Les utilisateurs sont toutefois perpétuellement demandeurs de traitements plus efficaces.

Une voie pour y parvenir consiste à utiliser des agents auxiliaires qui, mélangés aux produits phytosanitaires, apportent à ces derniers un gain d'efficacité.

Ces agents auxiliaires, globalement appelés « adjuvants » dans ce qui suit, sont typiquement mis en présence de la ou des matières actives à améliorer de deux façons :
- soit ils sont partie intégrante de la préparation phytosanitaire commercialisée, dénommée «spécialité phytosanitaire» dans ce qui suit, et on les appellera alors «coformulant» ;
- soit ils sont ajoutés au moment de l'utilisation à la bouillie de traitement constituée le plus souvent d'un mélange d'eau et d'une spécialité phytosanitaire. Ce mélange extemporané des produits peut se faire dans un ordre variable. Ainsi utilisé, l'adjuvant est appelé «spécialité adjuvante» dans ce qui suit.
   La présente invention a pour but de proposer de nouveaux adjuvants du type coformulant ou spécialité adjuvante qui ont la propriété d'accroître l'efficacité des traitements phytosanitaires.
   On connaît de FR 91 06753 une composition comprenant du tallate de cuivre associé à des dérivés terpéniques. Dans cette composition, le tallate de cuivre agit en tant qu'agent actif fongicide.
   On connaît également de FR 93 15 653 (WO 9517822) une composition comprenant une huile de pin et un agent tensio-actif en tant d'adjuvant d'une composition ou d'une bouillie herbicide.
   On a découvert à présent que lorsque l'on employait un dérivé terpénique en combinaison avec certains esters d'acides gras, on obtenait un effet de synergie marqué.
   L'invention a ainsi pour objet l'utilisation d'une composition constituée d'un mélange d'
   (i) au moins un ester d'acide gras et d'
   (ii) au moins un dérivé terpénique,
en tant qu'adjuvant améliorant l'efficacité d'une substance active phytosanitaire, notamment herbicide, fongicide, insecticide ou régulatrice de croissance.

Les esters d'acide gras de l'invention répondent notamment à la formule générale suivante : 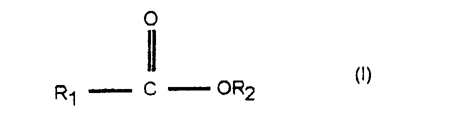 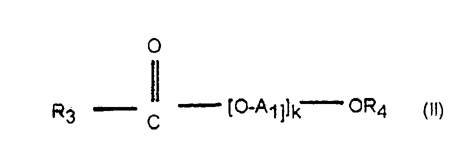 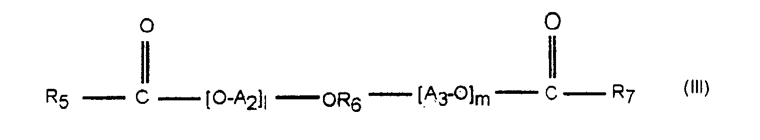 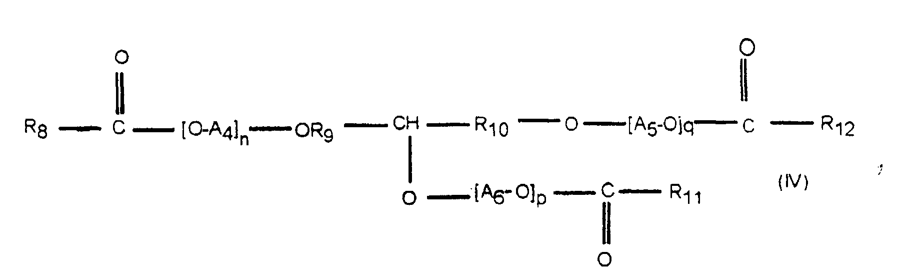 dans laquelle R₁, représente une chaîne hydrocarbonée linéaire ou ramifiée, saturée ou insaturée ayant de 10 à 30 atomes de carbone,
- R₂, représente une chaîne hydrocarbonée, linéaire ou ramifiée, saturée ou insaturée ayant de 1 à 11 atomes de carbone, de préférence de 1 à 5 atomes de carbone,
- A₁, A₂, A₃, A₄ A₅ et A₆ identiques ou différents représentent (CH₂)₂ ou (CH₂)₃ et
- le nombre total de molécules d'oxyde d'éthylène ou de propylène respectivement dans les formules II, III et IV précités par k. l+m, n+p+q est un nombre entier compris respectivement entre 5 et 20.5 et 30 et 10 et 50.

De préférence, R₁, est un groupe hydrocarboné linéaire ou ramifié comprenant de 16 à 22 atomes de carbone.

Avantageusement, ces groupes sont insaturés et peuvent contenir au moins une double liaison. On peut citer notamment les acides oléïques, linoléïques et linoléniques.

Des groupes particulièrement préférés sont ceux des acides gras obtenus à partir des huiles de colza, de soja, de tournesol, de maïs, d'arachide, d'olive, de palme, de lin, de carthame, de coton, de sésame, ou à partir du tall-oil.

Des résultats particulièrement intéressants sont obtenus avec des esters alkyliques d'acide gras de formule I, dans laquelle R₂ comprend de préférence de 1 à 11 atomes de carbone.

A cet égard, on peut citer les esters méthylique, éthylique, propylique, isopropylique, butylique, isobutylique, pentylique, hexylique, octylique, octylique ramifié du type éthyl-hexylique et ceux obtenus par condensation avec le décanol.

D'autres esters appropriés sont les esters résultant de la condensation d'un ou plusieurs acides gras tels que définis ci-dessus et d'alcools terpéniques. Comme alcool terpénique, on peut notamment citer le nopol (6,6-diméthyl bicyclo-(3,1,1)-2-heptène-2-éthanol).

Les esters de formule générale I selon l'invention peuvent être obtenus :
- par estérification directe des acides gras avec un alcool monofonctionnel ;
- par transestérification des huiles végétales avec un alcool en présence de l'alcoolate correspondant, par exemple avec le méthanol en présence de méthylate de sodium dans le cas des esters méthyliques.

Les dérivés terpéniques au sens de la présente invention sont des molécules organiques contenant dix atomes de carbone dans leur structure.

Il s'agit donc essentiellement des monoterpenes.

Les dérivés terpéniques peuvent être acycliques, monocycliques ou bicycliques.

On peut citer notamment les exemples suivants :
1) les carbures terpéniques :
   a) carbures terpéniques acycliques : myrcène, alloöcymène... ;
   b) carbures terpéniques monocycliques : dipentène, terpinolène, p-cymène, limonène... ;
   c) carbures terpéniques bicycliques : α-pinène, β-pinène ou δ-3-carène... ;
2) les composés suivants :
   a - les dérivés oxydés : cinéols ;
   b- les alcools terpéniques: bornéol, fenchol, menthanol, terpinéols, géraniol... ;
   c - les aldéhydes et les cétones : camphre, fenchone ;
3) les mélanges des produits précédemment cités ;
4) les huiles de pin d'origine naturelle ou de synthèse qui sont définies comme étant des mélanges d'alcools et de carbures terpéniques ; et
5) le tea tree oil (ou huile de *Melalenca alternifolia*) qui est défini comme étant un mélange d'alcools terpéniques (terpinéno-4-ol, α-terpinéol....), de carbures terpéniques (α et δ-terpinène, p-cymène. limonène...) et de cinéole-1,8.

On préfère tout particulièrement l'huile de pin à 90 % d'alcools terpéniques.

Les compositions selon l'invention peuvent être utilisées à titre de compositions adjuvantes à usage phytosanitaire, notamment pour améliorer l'efficacité d'une substance active phytosanitaire herbicide, fongicide, insecticide ou régulatrice de croissance.

Une composition selon l'invention comprend de 80 à 20 % en poids, de préférence de 60 à 40 % en poids du composé (i) et de 20 à 80 % en poids, de préférence de 40 à 60 % en poids du composé (ii).

L'association d'une composition selon la présente invention et d'une substance active fongicide, insecticide, herbicide ou régulatrice de croissance, a pour effet d'augmenter de façon surprenante l'efficacité du traitement, ce qui peut aussi permettre d'utiliser une dose réduite de substance.

Ce dernier point et le fait que les ingrédients de base d'une composition, selon la présente invention, soient des dérivés de produits naturels, vont dans le sens d'un meilleur respect de l'environnement.

Une composition selon l'invention est tout particulièrement efficace pour améliorer les propriétés d'une substance active pénétrante ou systémique, qui agit par absorption à l'intérieur de la plante.

On peut l'employer par exemple avec un produit herbicide à base d'une telle substance agissant par absorption à l'intérieur de la plante. Parmi les familles d'agents herbicides, on peut citer les aryloxyphénoxypropionates, les cyclohexanediones, les diazines, les triazines, les pyridylphényléthers, les tricétones, les carbamates et les dérivés du benzofuranne, et en particulier :
- le phénoxaprop-p-éthyl,
- le quizalofop-éthyl et son isomère D,
- le diflufénicanil, l'ioxynil, le bromoxynil et leurs mélanges,
- le phenmédiphame, l'éthofumésate, le desmédiphame et leurs mélanges,
- le clodinafop propargyl et son mélange avec un agent phytoprotecteur, le cloquintocet mexyl,
- le pyridate,
- la sulcotrione
- la bentazone, l'atrazine et leurs mélanges.

On peut également l'employer avec un produit régulateur de croissance, notamment le chlorméquat chlorure utilisé seul ou en association avec le chlorure de choline.

Une composition selon l'invention peut typiquement être mise en oeuvre de deux manières : sous forme de coformulant ou sous forme de spécialité adjuvante, les deux termes ayant été définis précédemment.

Les spécialités phytosanitaires, telles que définies plus haut contenant un coformulant constitué par un mélange selon l'invention sont aussi objet de l'invention.

Les spécialités adjuvantes basées sur une composition selon l'invention sont également objet de l'invention. Elles sont constituées d'une composition selon l'invention, à laquelle on a ajouté un ou plusieurs émulsifiants pour permettre à celle-ci de se disperser facilement dans l'eau

Les émulsifiants peuvent être de type anionique ou non ionique On peut utiliser par exemple les alkyl phénol éthoxylés, les alcools gras éthoxylés, les acides gras éthoxylés, les esters d'acide gras éthoxylés et les triglycérides éthoxylés.

Les exemples suivants illustrent l'invention. Les bouillies herbicides ont été préparées en utilisant une spécialité phytosanitaire et une spécialité adjuvante.

Les pourcentages sont exprimés en poids sauf indications contraires.

### EXEMPLE 1

Cet essai, réalisé en conditions contrôlées, compare les effets obtenus avec trois bouillies de traitement contenant une même spécialité phytosanitaire et de l'eau, respectivement mélangées avec trois spécialités adjuvantes différentes.

Les trois spécialités adjuvantes contiennent le même émulsifiant (huile de ricin éthoxylé à 18/20 OE), en même proportion (25 % en poids) :
- la spécialité adjuvante B (Adj. B) est constituée d'un mélange d'ester méthylique d'acides gras issus du tall-oil dont la composition est la suivante :
   . acide oléïque 53,1 %
   . acide linoléïque 36,8 %
   . acides palmitique et stéarique 2,4 %
   . acides gras divers (palmitoléïque, élaïdique, pinoléïque, arachidique...) 7,7 %
   et d'émulsifiant.
- la spécialité adjuvante C (Adj. C) est constituée d'un mélange d'huile de pin contenant 90 % d'alcools terpéniques et d'émulsifiant.
- la spécialité adjuvante A (Adj. A) est constituée d'un mélange de 40 % d'adjuvant B et 60 % d'adjuvant C.

La spécialité phytosanitaire herbicide utilisée est le CELIO® de CIBA Protection des Plantes (clodinafop-propargyl + cloquintocet mexyl).

Les pulvérisations s'effectuent à 150 I de bouillie à l'hectare. La mauvaise herbe modèle est l'avoine (*Avena sativa*). L'effet herbicide est mesuré par la masse de matière sèche des plantes 10 jours après le traitement.

Les doses de CELIO® appliquées sont respectivement de 0,005 - 0,015 - 0,044 - 0,13 - 0,4 et 1,2 l/ha.

Les doses des adjuvants (Adj. B, Adj. C et Adj. A) sont de 0,5 l/hl.

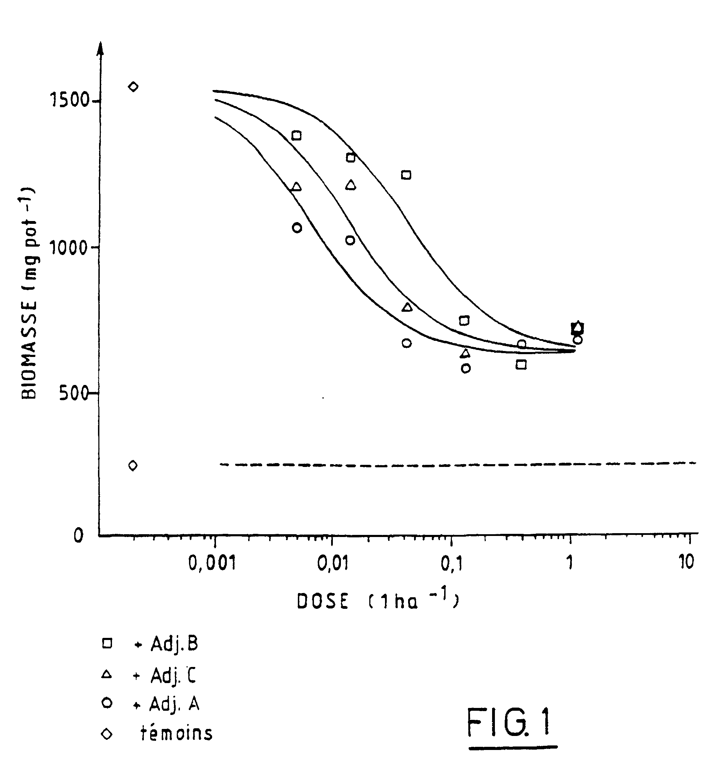

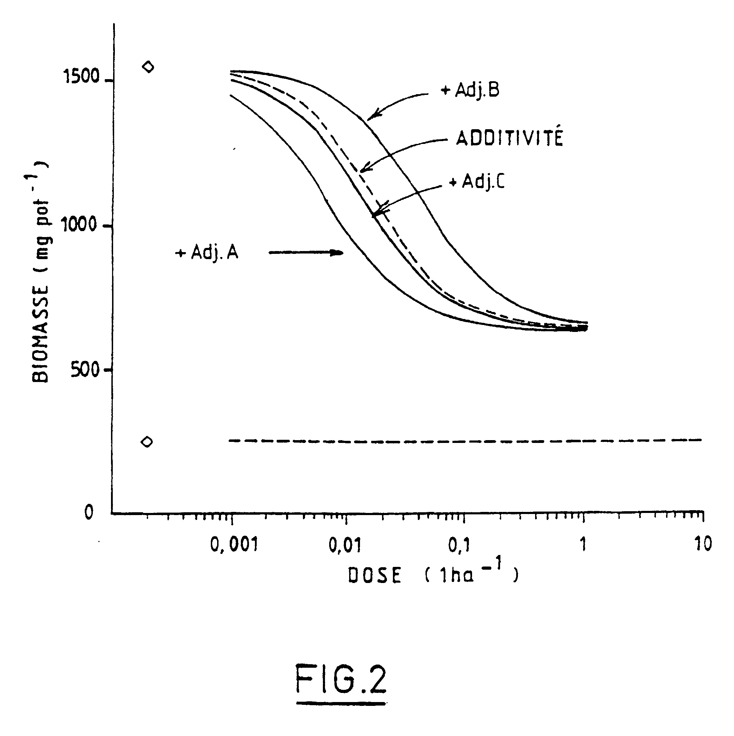

Dans les figures 1 et 2, les courbes illustrent l'ensemble des réponses à des doses variables de spécialité phytosanitaire.
- sur la figure 1, sont représentées les trois courbes obtenues avec les trois bouillies de traitement, ne se différenciant que par la spécialité adjuvante.

Les doses permettant d'obtenir 50 % d'inhibition (I₅₀) sont respectivement :
- bouillie contenant Adj. B = 0,044 ± 0,017 l/ha
- bouillie contenant Adj. C = 0,014 ± 0,006 l/ha
- bouillie contenant Adj. A = 0,007 ± 0,003 l/ha
- sur la figure 2, est ajoutée la courbe d'additivité, calculée à partir des courbes correspondant aux traitements contenant les Adj. B et Adj. C.

Pour ce modèle de calcul, on utilise le modèle d'additivité de doses et on prend en compte le rapport de Adj. B et Adj. C dans le mélange Adj. A, c'est-à-dire respectivement 0,4 et 0,6.

La figure 2 indique les positions relatives de la courbe d'additivité et de la courbe de réponse du traitement contenant l'Adj. A.

La courbe de réponse est décalée vers les faibles doses par rapport à la courbe d'additivité, ce qui traduit l'effet de synergie.

### EXEMPLE 2

Evaluation de l'intérêt de différentes spécialités adjuvantes en association avec PUMA S® de AGREVO (fénoxaprop-p-éthyl) sur vulpin (*Alopecurus myosuroides*).

Les essais ont été réalisés en serres sur plantes en pots avec semis des adventices. Le traitement herbicide a été effectué au stade 2-4 feuilles des adventices. A la fin de l'essai, le vulpin a été coupé pour pesée de la matière fraîche.

Les résultats sont indiqués au tableau I ci-après.

**TABLEAU I**

| HERBICIDE (dose) | ADJUVANT (dose) | Poids de la matière fraîche |
|---|---|---|
| PUMA S(0,6 l/ha) | - | 0,54 g |
| PUMA S (0,4 l/ha) | - | 4,71 g |
| PUMA S (0,3 l/ha) | - | 8,30 g |
| PUMA S (0,3 l/ha) | HP (1 l/ha) | 2,30 g |
| PUMA S (0,3 l/ha) | ESTER 1 (1 l/ha) | 4,19 g |
| PUMA S (0,3 l/ha) | ESTER 2 (1 l/ha) | 2.31 g |
| PUMA S (0,3 l/ha) | ESTER 3 (1 l/.ha) | 2,67 g |
| PUMA S (0,3 l/ha) | ESTER 4 (1 l/ha) | 3,82 g |
| PUMA S (0,3 l/ha) | HP (0,5 l/ha) + ESTER 1 (0,5 l/ha) | 0,45 g |
| PUMA S (0,3 l/ha) | HP (0,5 l/ha) + ESTER 2 (0,5 l/ha) | 0,40 g |
| PUMA S (0,3 l/ha) | HP (0,5 l/ha) + ESTER 3 (0,5 l/ha) | 1,34 g |
| PUMA S (0,3 l/ha) | HP (0,5 l/ha) + ESTER 4 (0,5 l/ha) | 1,50 g |
| HP : huile de pin contenant 90 % d'alcools terpéniques + émulsifiant (dans les proportions 75/25) | | |
| ESTER 1: ester méthylique d'acides gras issus du tall-oil + émulsifiant (dans les proportions 75/25) | | |
| ESTER 2 : ester butylique d'acides gras issus du tall-oil + émulsifiant (dans les proportions 75/25) | | |
| ESTER 3 : ester isobutylique d'acides gras issus du tall-oil + émulsifiant (dans les proportions 75/25) | | |
| ESTER 4 : ester éthyl hexylique d'acides gras issus du tall-oil + émulsifiant (dans les proportions 75/25) | | |

Ces différentes spécialités adjuvantes ont été formulées en ajoutant un nonyl phénol éthoxylé à 9/10 OE comme émulsionnant.

Ces résultats montrent un effet de synergie très marqué lorsqu'on utilise un mélange d'un dérivé d'acide gras et d'huile de pin. selon l'invention, notamment lorsque le dérivé d'acide gras est un ester méthylique ou butyiique.

Dans les exemples 3 à 8 qui suivent, la spécialité adjuvante A (Adj. A) est constituée d'un mélange d'ester méthylique d'acides gras issus du tall-oil, d'huile de pin contenant 90 % d'alcools terpéniques et d'huile de ricin éthoxylée à 18/20 OE (dans les proportions 30/45/25).

### EXEMPLE 3

Evaluation au champ de l'efficacité de la spécialité adjuvante A (Adj. A) en association avec PUMA S® sur les vulpins en culture de blé tendre d'hiver.

Les résultats sont rapportés au tableau II ci-après.

**TABLEAU II**

| HERBICIDE (dose) | ADJUVANT (dose) | Efficacité visuelle sur vulpins T + 46 j |
|---|---|---|
| PUMA S (1,2 l/ha) | | 53,33 % |
| PUMA S (1,2 l/ha) | Adj. A (1 l/ha) | 73,33 % |
| PUMA S (0,9 l/ha) | | 36,67 % |
| PUMA S (0,9 l/ha) | Adj. A (1 l/ha) | 53,33 % |
| PUMA S (0,6 l/ha) | | 23,33 % |
| PUMA S (0,6 l/ha) | Adj. A (1 l/ha) | 53,33 % |
| PUMA S (0,3 l/ha) | | 13,33 % |
| PUMA S (0,3 l/ha) | Adj. A (1 l/ha) | 40,00 % |
| Culture non traitée : 60 vulpins/m² | | |

### EXEMPLE 4

Évaluation au champ de l'efficacité de la spécialité adjuvante A (Adj. A) en association avec CELIO® sur les vulpins en culture de blé tendre d'hiver.

Les résultats sont rapportés au tableau III ci-après.

**TABLEAU III**

| HERBICIDE (dose) | ADJUVANT (dose) | Efficacités visuelles sur vulpins | | |
|---|---|---|---|---|
| | | T + 17 j | T + 34 j | T + 50 j |
| CELIO (0,60 l/ha) | | 45,00 % | 98,75 % | 100 % |
| CELIO (0,60 l/ha) | Adj. A (1 l/ha) | 65,00 % | 99,00 % | 100 % |
| CELIO (0,45 l/ha) | | 43,75 % | 98,00 % | 100 % |
| CELIO (0,45 l/ha) | Adj. A (1 l/ha) | 57,50 % | 98,00 % | 100 % |
| CELIO (0,30 l/ha) | | 36,25 % | 98,00 % | 96,00 % |
| CELIO (0,30 l/ha) | Adj. A (1 l/ha) | 62,50 % | 99,00 % | 99,75 % |
| CELIO (0,15 l/ha) | | 26,25 % | 62,50 % | 53,75 % |
| CELIO (0,15 l/ha) | Adj. A (1 l/ha) | 58,75 % | 99,00 % | 98,25 % |
| Culture non traitée : 303 vulpins/m² | | | | |

### EXEMPLE 5

Evaluation au champ de l'efficacité de la spécialité adjuvante A (Adj. A) en association avec LENTAGRAN® de SANDOZ AGRO (pyridate), MIKADO® de SOPRA (sulcotrione) ou LADDOK® de BASF France (bentazone + atrazine) contre les dicotylédones et dicotylédones + graminées en culture de maïs.

Les résultats sont rapportés au tableau IV ci-après.

**TABLEAU IV**

| HERBICIDE (dose) | ADJUVANT (dose) | Efficacités visuelles | | | |
|---|---|---|---|---|---|
| | | Sur dicotylédones | | sur dicotylédones + graminées | |
| | | T+13j | T+24j | T+13j | T+24j |
| LENTAGRAN A (1,5 l/ha) | | 90,0 % | 90,0 % | 50,0 % | 50,0 % |
| LENTAGRAN A (0,75 l/ha) | | 88,3 % | 63,3 % | 50,0 % | 33,3 % |
| LENTAGRAN A (0,75 l/ha) | Adj. A (1 l/ha) | 90,0 % | 90,0 % | 50,0 % | 50,0 % |
| MIKADO (1 l/ha) | | 93,3 % | 96,0 % | 88,3 % | 90,0 % |
| MIKADO (0,5 l/ha) | | 25,0 % | 56,7 % | 33,3 % | 66,7 % |
| MIKADO (0,5 l/ha) | Adj. A (1 l/ha) | 97,7 % | 96,3 % | 86,7 % | 86,7 % |
| LADDOK (3 l/ha) | | 98,0 % | 97,7 % | 50,0 % | 50,0 % |
| LADDOK (1,5 l/ha) | | 91,0 % | 84,3 % | 43,3 % | 43,3 % |
| LADDOK (1,5 l/ha) | Adj. A (1 l/ha) | 95,7 % | 97,0 % | 46,7 % | 50,0 % |
| Culture non traitée :107 digitaires sanguines (*Digitaria sanguin*a*lis*)/m² 118 chénopodes blancs (*Chenopodium album*)/m² 27 renouées pâles (*Polygonum tomentosum)*/m² 3 amarantes réfléchies (*Amaranthus retroflexus*)/m² | | | | | |

### EXEMPLE 6

Comparaison au champ de l'efficacité de la spécialité adjuvante A (Adj. A) en association avec BETANAL PROGRESS® de AGREVO (phenmédiphame + desmédiphame + éthofumesate) sur pensées des champs (*Viola arvensis*) et mercuriales (*Mercurialis annua*), en culture de betteraves.

Les résultats sont rapportés au tableau V ci-après.

**TABLEAU V**

| HERBICIDE (dose) | ADJUVANT (dose) | Efficacités visuelles | |
|---|---|---|---|
| | | T + 8 j | T + 15 j |
| BETANAL PROGRESS (5 l/ha) | | 72,50 % | 47,50 % |
| BETANAL PROGRESS (5 l/ha) | Adj. A (1 l/ha) | 73,75 % | 75,00 % |
| BETANAL PROGRESS (3,75 l/ha) | | 66,25 % | 63,75 % |
| BETANAL PROGRESS (3,75 l/ha) | Adj. A (1 l/ha) | 71,25 % | 63,75 % |
| BETANAL PROGRESS (2,5 l/ha) | | 25,00 % | 26,25 % |
| BETANAL PROGRESS (2,5 l/ha) | Adj A (1 l/ha) | 63,75 % | 52,50 % |
| BETANAL PROGRESS (1,25 l/ha) | | 12,50 % | 15,00 % |
| BETANAL PROGRESS (1,25 l/ha) | Adj. A (1 l/ha) | 8,75 % | 17,50 % |
| Culture non traitée :32 pensées des champs/m² 15 mercuriales/m² | | | |

### EXEMPLE 7

Comparaison au champ de l'efficacité de la spécialité adjuvante A (Adj. A) en association avec TARGA D+® de Rhône-Poulenc Agro (quizalofop éthyl isomère D) sur pois protéagineux

Les résultats sont rapportés aux tableaux VI et VII ci-après.

**TABLEAU VI :**

| HERBICIDE HERBICIDE | ADJUVANT (dose) | Efficacités visuelles sur paturins | | |
|---|---|---|---|---|
| (dose) | | T + 10 j. | T + 30 j. | T + 51 j. |
| TARGA D+ (1,25 l/ha) | | 70,0% | 83,3 % | 76,7 % |
| TARGA D+ (1,25 l/ha) | Adj. A (1 l/ha) | 80,0 % | 85,0 % | 80,0 % |
| TARGA D+ (1.25 l/ha) | Adj. A (2 l/ha) | 80,0 % | 86,7 % | 83,3 % |

**TABLEAU VII :**

| HERBICIDE (dose) | ADJUVANT (dose) | Efficacités visuelles sur raygrass à T+ 9 j. |
|---|---|---|
| TARGA D+ (1,25 l/ha) | | 66,7 % |
| TARGA D+ (0,6 l/ha) | | 43,3 % |
| TARGA D+ (0,6 l/ha) | Adj. A (0,5 l/ha) | 53,3 % |
| TARGA D+ (0,6 l/ha) | Adj. A (0,75 l/ha) | 56,7 % |
| TARGA D+ (0,6 l/ha) | Adj. A (1 l/ha) | 68,3 % |

### EXEMPLE 8

Comparaison au champ de l'efficacité de la spécialité adjuvante A (Adj. A) en association avec CYCOCEL C5® de BASF (chlorméquat chlorure + chlorure de choline) sur céréales à paille, variété SIDERAL très sensible à la verse.

Les résultats sont rapportés au tableau VIII ci-après :

**TABLEAU VIII :**

| RACCOURCISSEUR (dose) | ADJUVANT (dose) | Observations à T + 46 j. | | |
|---|---|---|---|---|
| | | Nbred'épis/m² | Hauteur de plante | |
| | | | en cm | % du témoin |
| Culture non traitée | | 371 | 83,4 | 100 % |
| CYCOCEL C5 (2 l/ha) | | 361 | 80,9 | - 3 % |
| CYCOCEL C5 (2 l/ha) | Adj. A (0,5 l/ha) | 376 | 76,6 | - 9 % |
| CYCOCEL C5 (2 l/ha) | Adj. A (1 l/ha) | 395 | 74,6 | - 10,5 % |

## Revendications

1. Utilisation d'une composition comprenant un mélange :
(i) d'au moins un ester d'acide gras ;
(ii) et d'au moins un dérivé terpénique, en tant qu'adjuvant améliorant l'efficacité d'une substance active phytosanitaire, notamment herbicide, fongicide, insecticide ou régulatrice de croissance, **caractérisée en ce que** l'ester d'acide gras répond à la formule générale suivante : 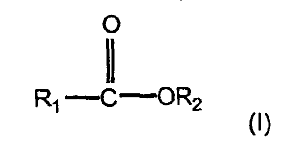
dans laquelle R₁, représente une chaîne hydrocarbonée linéaire ou ramifiée, saturée ou insaturée ayant de 10 à 30 atomes de carbone,
- R₂ représente une chaîne hydrocarbonée, linéaire ou ramifiée, saturée ou insaturée ayant de 1 à 11 atomes de carbone, de préférence de 1 à 5 atomes de carbone.

2. Utilisation selon la revendication 1, dans laquelle :
- R₂ représente un groupe choisi parmi un radical méthyle, éthyle, propyle, isopropyle, butyle, isobutyle, pentyle, hexyle, octyle, éthylhexyle, décyle et terpényle.

3. Utilisation selon la revendication 1 ou 2, **caractérisée en ce que** R₁, représente une chaîne hydrocarbonée linéaire ou ramifiée, saturée ou insaturée en C₁₆-C₂₂.

4. Utilisation selon l'une quelconque des revendications précédentes, **caractérisée en ce que** R₁ représente une chaîne hydrocarbonée insaturée.

5. Utilisation selon l'une quelconque des revendications précédentes, **caractérisée en ce que** R₁ représente une chaîne d'un acide gras obtenu à partir de l'huile de colza, de soja, de tournesol, de maïs, d'arachide, d'olive, de palme, de lin, de carthame, de coton, de sésame ou à partir du tall-oil.

6. Utilisation selon l'une quelconque des revendications précédentes, **caractérisée en ce que** R₂ est un groupe alkyle comprenant de 1 à 11 atomes de carbone.

7. Utilisation selon l'une quelconque des revendications précédentes, **caractérisée en ce que** le composé (I) est choisi parmi les esters méthylique, butylique, isobutylique et éthylhéxylique d'un mélange d'acides gras insaturés.

8. Utilisation selon l'une quelconque des revendications précédentes, **caractérisée en ce que** le composé (I) est un ester méthylique d'un mélange d'acide gras du tall-oil.

9. Utilisation selon l'une quelconque des revendications précédentes, **caractérisée en ce que** le dérivé terpénique est un monoterpène ou un mélange de monoterpènes.

10. Utilisation selon l'une quelconque des revendications précédentes, **caractérisée en ce que** le dérivé terpénique est choisi parmi les carbures terpéniques, les dérivés oxydés des carbures terpéniques, les alcools terpéniques, les aldéhydes et cétones terpéniques et leurs mélanges.

11. Utilisation selon l'une quelconque des revendications précédentes, **caractérisée en ce que** le dérivé terpénique est un mélange de carbures terpéniques et d'alcools terpéniques.

12. Utilisation selon l'une quelconque des revendications précédentes, **caractérisée en ce que** le dérivé terpénique est une huile de pin.

13. Utilisation selon l'une quelconque des revendications précédentes, **caractérisée en ce que** le dérivé terpénique est une huile de pin à 90 % d'alcools terpéniques.

14. Utilisation selon l'une quelconque des revendications précédentes, **caractérisée en ce que** le mélange comprend de 80 à 20 % en poids, de préférence de 60 à 40 % en poids du composé (i) et de 20 à 80 % en poids, de préférence de 40 à 60 % en poids du composé (ii).

15. Utilisation selon l'une quelconque des revendications précédentes, **caractérisée en ce que** la composition comprend :
(i) un ester méthylique d'un mélange d'acides gras du tall-oil ;
(ii) de l'huile de pin à 90 % d'alcools terpéniques.

16. Utilisation selon l'une quelconque des revendications précédentes, **caractérisée en ce que** la composition comprend en outre un agent émulsifiant.

17. Utilisation d'un mélange selon l'une quelconque des revendications précédentes dans une composition phytosanitaire, comprenant une substance active herbicide, fongicide, insecticide ou régulatrice de croissance.

## Patentansprüche

1. Verwendung einer Zusammensetzung, die ein Gemisch aus
I) mindestens einem Fettsäureester und
II) mindestens einem Terpenderivat als ein Zusatzstoff, der die Effizienz eines insbesondere herbiziden, fungiziden, insektiziden oder das Pflanzenwachstum regulierenden Pflanzenschutzwirkstoffs erhöht, enthält, **dadurch gekennzeichnet, dass** der Fettsäureester die allgemeine Formel 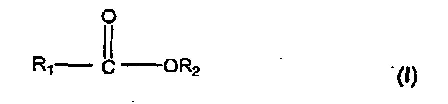 besitzt, in welcher
- R₁ eine gesättigte bzw. ungesättigte geradkettige oder verzweigte Kohlenwasserstoffkette mit 10 bis 30 Kohlenstoffatomen und
- R₂ eine gesättigte bzw. ungesättigte geradkettige oder verzweigte Kohlenwasserstoffkette mit 1 bis 11 Kohlenstoffatomen und vorzugsweise 1 bis 5 Kohlenstoffatomen bedeutet.

2. Verwendung nach Anspruch 1, bei welcher
- R₂ eine Gruppe bedeutet, die aus einem Methyl-, Ethyl-, Propyl-, Isopropyl-, Butyl-, Isobutyl-, Pentyl-, Hexyl-, Octyl-, Ethylhexyl-, Decyl- und Terpenylrest ausgewählt ist.

3. Verwendung nach Anspruch 1 oder 2, **dadurch gekennzeichnet, dass** R₁ eine gesättigte bzw. ungesättigte geradkettige oder verzweigte C₁₆- bis C₂₂-Kohlenwasserstoffkette bedeutet.

4. Verwendung nach einem der vorhergehenden Ansprüche, **dadurch gekennzeichnet, dass** R₁ eine ungesättigte Kohlenwasserstoffkette bedeutet.

5. Verwendung nach einem der vorhergehenden Ansprüche, **dadurch gekennzeichnet; dass** R₁ die Kette einer Fettsäure bedeutet, die aus Raps-, Soja-, Sonnenblumen-, Mais-, Erdnuß-, Oliven-, Palm-, Lein-, Saflor-, Baumwollsamen-, Sesam- oder Tallöl gewonnen wurde.

6. Verwendung nach einem der vorhergehenden Ansprüche, **dadurch gekennzeichnet, dass** R₂ eine Alkylgruppe bedeutet, die 1 bis 11 Kohlenstoffatome enthält.

7. Verwendung nach einem der vorhergehenden Ansprüche, **dadurch gekennzeichnet, dass** die Verbindung I) aus Methyl-, Butyl-, Isobutyl- und Ethylhexylester eines Gemischs aus ungesättigten Fettsäuren ausgewählt ist.

8. Verwendung nach einem der vorhergehenden Ansprüche, **dadurch gekennzeichnet, dass** die Verbindung I) ein Methylester eines Fettsäuregemischs von Tallöl ist.

9. Verwendung nach einem der vorhergehenden Ansprüche, **dadurch gekennzeichnet, dass** das Terpenderivat ein Monoterpen oder ein Monoterpengemisch ist.

10. Verwendung nach einem der vorhergehenden Ansprüche, **dadurch gekennzeichnet, dass** das Terpenderivat aus Terpenkohlenwasserstoffen, oxidierten Derivaten von Terpenkohlenwasserstoffen, Terpenalkoholen, Terpenaldehyden und -ketonen und ihren Gemischen ausgewählt ist.

11. Verwendung nach einem der vorhergehenden Ansprüche, **dadurch gekennzeichnet, dass** das Terpenderivat ein Terpenkohlenwasserstoff-Terpenalkohol-Gemisch ist.

12. Verwendung nach einem der vorhergehenden Ansprüche, **dadurch gekennzeichnet, dass** das Terpenderivat Kiefernöl ist.

13. Verwendung nach einem der vorhergehenden Ansprüche, **dadurch gekennzeichnet, dass** das Terpenderivat ein 90 % Terpenalkohole enthaltendes Kiefernöl ist.

14. Verwendung nach einem der vorhergehenden Ansprüche, **dadurch gekennzeichnet, dass** das Gemisch 80 bis 20 Gew.-% und vorzugsweise 60 bis 40 Gew.-% Verbindung I) und 20 bis 80 Gew.-% und vorzugsweise 40 bis 60 Gew.-% Verbindung II) enthält.

15. Verwendung nach einem der vorhergehenden Ansprüche, **dadurch gekennzeichnet, dass** die Zusammensetzung
I) einen Methylester eines Fettsäuregemischs von Tallöl und
II) 90 % Terpenalkohole enthaltendes Kiefernöl
enthält.

16. Verwendung nach einem der vorhergehenden Ansprüche, **dadurch gekennzeichnet, dass** die Zusammensetzung außerdem einen Emulgator enthält.

17. Verwendung eines Gemischs nach einem der vorhergehenden Ansprüche in einer Pflanzenschutzzusammensetzung, die ein Herbizid, Fungizid, Insektizid oder einen Wachstumsregulator enthält.

## Claims

1. Use of a composition comprising a mixture of:
(i) at least one fatty acid ester;
(ii) and at least one terpene derivative, as an additive improving the efficiency of a phytosanitary active substance, in particular a herbicide, fungicide, insecticide or growth regulator, **characterized in that** the fatty acid ester corresponds to the following general formula: 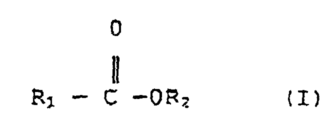 in which R₁ represents a saturated or unsaturated linear or branched hydrocarbon chain having 10 to 30 carbon atoms.
R₂ represents a saturated or unsaturated linear or branched hydrocarbon chain having 1 to 11 carbon atoms, preferably 1 to 5 carbon atoms.

2. Use according to claim 1, wherein:
- R₂ represents a group chosen from a methyl, ethyl, propyl, isopropyl, butyl, isobutyl, pentyl, hexyl, octyl, ethylhexyl. decyl and terpenyl radical.

3. Use according to claim 1 or 2, **characterized in that** R₁ represents a saturated or unsaturated, linear or branched hydrocarbon chain with C₁₆-C₂₂.

4. Use according to any one of the preceding claims, **characterized in that** R₁ represents an unsaturated hydrocarbon chain.

5. Use according to any one of the preceding claims, **characterized in that** R₁ represents a chain of a fatty acid obtained from the oil of colza, soya, sunflower, maize, groundnut, olive, palm, linseed, safflower, cottonseed, sesame or from tall oil.

6. Use according to any one of the preceding claims, **characterized in that** R₂ is an alkyl group having 1 to 11 carbon atoms.

7. Use according to any one of the preceding claims, **characterized in that** the compound (I) is chosen from the methyl, butyl, isobutyl and ethylhexyl esters of a mixture of unsaturated fatty acids.

8. Use according to any one of the preceding claims, **characterised in that** the compound (I) is a methyl ester of a mixture of fatty acids of tall-oil.

9. Use according to any one of the preceding claims, **characterised in that** the terpene derivative is a monoterpene or a mixture of monoterpenes.

10. Use according to any one of the preceding claims, **characterized in that** the terpens derivative is chosen from terpene-hydrocarbons, the oxidated derivatives of terpene-hydrocarbons, terpene alcohols, terpene aldehydes and ketones and mixtures thereof.

11. Use according to any one of the preceding claims, **characterized in that** the terpene derivative is a mixture of terpene hydrocarbons and terpene alcohols.

12. Use according to any one of the preceding claims, **characterized in that** the terpene derivative is a pine oil.

13. Use according to any one of the preceding claims, **characterized in that** the terpene derivative is a pine oil with 90 % terpene alcohols.

14. Use according to any one of the preceding claims, **characterized in that** the mixture comprises 80 to 20 % by weight, preferably 60 to 40 % by weight of the compound (i) and 20 to 80 % by weight, preferably 40 to 60 % by weight of the compound (ii).

15. Use according to any one of the preceding claims. **characterized in that** the composition comprises :
(i) a methyl ester of a mixture of fatty acids of tall-oil ;
(ii) pine oil with 90 % terpene alcohols.

16. Use according to any one of the preceding claims, **characterized in that** the composition additionally includes an emulsifying agent.

17. Use of a mixture according to any one of the preceding claims in a phytosanitary composition, comprising an active herbicide, fungicide or insecticide substance or a growth regulator.
